Europäisches Patentamt

European Patent Office

Office européen des brevets

(19)

(11) Publication number: **0 452 703 A1**

# EUROPEAN PATENT APPLICATION

(12)

(21) Application number: 91104583.9

(22) Date of filing: 23.03.91

(51) Int. Cl.5: **G21C 19/40**

(30) Priority: 28.03.90 SE 9001135

(43) Date of publication of application:
23.10.91 Bulletin 91/43

(84) Designated Contracting States:
CH DE FR GB LI

(71) Applicant: **ABB ATOM AB**

S-721 83 Västeras(SE)

(72) Inventor: **Lindberg, Rainer**
**Hagagränd 25**
**S-723 37 Västeras(SE)**
Inventor: **Martensson, Eva**
**Hästhovsgatan 12**
**S-722 27 Västeras(SE)**

(74) Representative: **Boecker, Joachim, Dr.-Ing. et**
**al**
**Rathenauplatz 2-8**
**W-6000 Frankfurt a.M. 1(DE)**

(54) **Method and means for reducing the risk of criticality when transporting nuclear material, preferably in the form of fuel rods.**

(57) Method and means for reducing the risk of criticality when transporting nuclear material, preferably in the form of fuel rods. The fuel rods (11) are arranged in a symmetrical pattern with rows and columns in one or more fuel bundles (10) retained by spacers (14) and temporary supporting plates (15). Disc-shaped shims (16) containing neutron absorbing material are inserted crosswise, alternately between the rows and the columns, respectively, of fuel rods. The disc-shaped shims are made of a polymer material containing boron, preferably in the form of boron carbide, $B_4C$. The fuel bundles are then inserted into a transport container.

FIG.1

EP 0 452 703 A1

The invention relates to a method for reducing the risk of criticality when transporting nuclear material, preferably in the form of fuel rods, according to the precharacterising part of claim 1. The invention also relates to means for carrying out the method. The invention is particularly applicable to transports of nuclear fuel rods, which are transported arranged in bundles and enclosed within a transport container.

To avoid criticality when transporting nuclear fuel, according to known technique only a limited number of nuclear fuel rods are loaded on the same transport vehicle.

Usually, nuclear fuel rods are arranged in bundles. The fuel bundles are retained by spacers and, possibly, by temporary supporting plates. The supporting plates are then usually placed one at each end of the bundle.

The fuel rods are preferably arranged in a symmetrical pattern with rows and columns, enabling disc-shaped shims to be inserted between the rows and columns, respectively. By inserting these shims in a crosswise manner, that is, alternately between the rows and the columns, respectively, they will support the fuel bundles during the transportation while at the same time preventing the fuel rods from striking or chafing against one another.

With the nuclear fuel arranged for transport according to the technique described above, criticality is avoided by greatly limiting the amount of nuclear fuel per transport unit while observing strict safety factors.

Fuel bundles of the above-mentioned kind usually comprise 64, 96 ore 100 nuclear fuel rods and are usually placed two-by-two in a transport container. To avoid criticality, the number of transport containers per transport unit are limited. For example, the number of transport containers on a lorry are limited to two.

The invention aims at developing a method of the above-mentioned kind which greatly reduces the risk of criticality during transportation of the nuclear material.

To achieve this aim the invention suggests a method for reducing the risk of criticality when transporting nuclear material, according to the introductory part of claim 1, which is characterized by the features of the characterizing part of claim 1.

Means for carrying out the method according to the invention are characterized by the features of claim 2.

Further developments of the invention are characterized by the features of the additional claims 3 to 6.

The fuel bundles with the neutron-absorbing shims are placed in the usual manner in the transport container before they are loaded onto the transport vehicle.

The disc-shaped shims are made of a polymer material to which a neutron-absorbing material is added. As neutron-absorbing material there is preferably used boron carbide, suitably in the form of $B_4C$, which is added in a content of 0.5 to 5 per cent by weight. However, also other boron compounds as well as other neutron-absorbing compounds can be used.

A preferred form of disc-shaped shims is produced by mixing finely ground boron carbide, with a grain size less than 3 micrometer, with granules of, for example, polyethylene in a mixer. The fine boron carbide grains are thereby deposited on the surfaces of the plastic granules. The boron carbide is preferably added in a content of 1.0 to 2.5 per cent by weight. The plastic with intermixed boron carbide is then injection moulded under high pressure to the desired shape, preferably discs with elevated, longitudinal ridges.

By way of example, the invention will now be described in greater detail with reference to the accompanying drawings showing in

> Figure 1    a bundle of nuclear fuel rods provided with the means according to the invention,
>
> Figure 2,    in enlarged scale, a cross-section through the upper part of the fuel rod bundle shown in Figure 1,
>
> Figure 3    the arrangement of two fuel rod bundles in a transport container, which is loaded on, for example, a lorry.

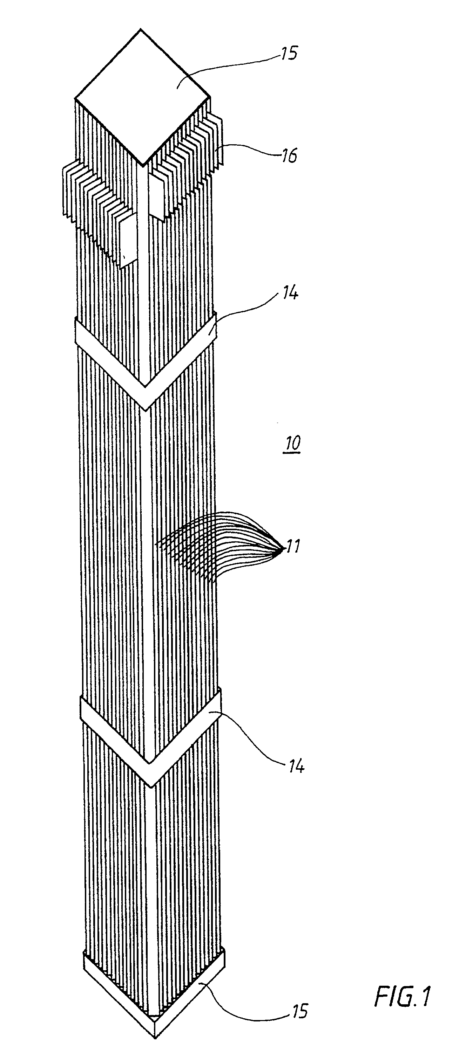

Figure 1 shows nuclear fuel rods 11 collected into a bundle 10. The fuel rods 11 are retained and arranged in a symmetrical pattern with rows 12 and columns 13 by spacers 14. To further support the fuel rods 11 during transportation, they are fixed at either end by temporary supporting plates 15. To prevent the fuel rods 11 from wearing or striking against one another and to avoid criticality, disc-shaped shims 16, containing a neutron absorbing material, are inserted between the columns 13 and the rows 12, respectively, formed by the fuel rods 11.

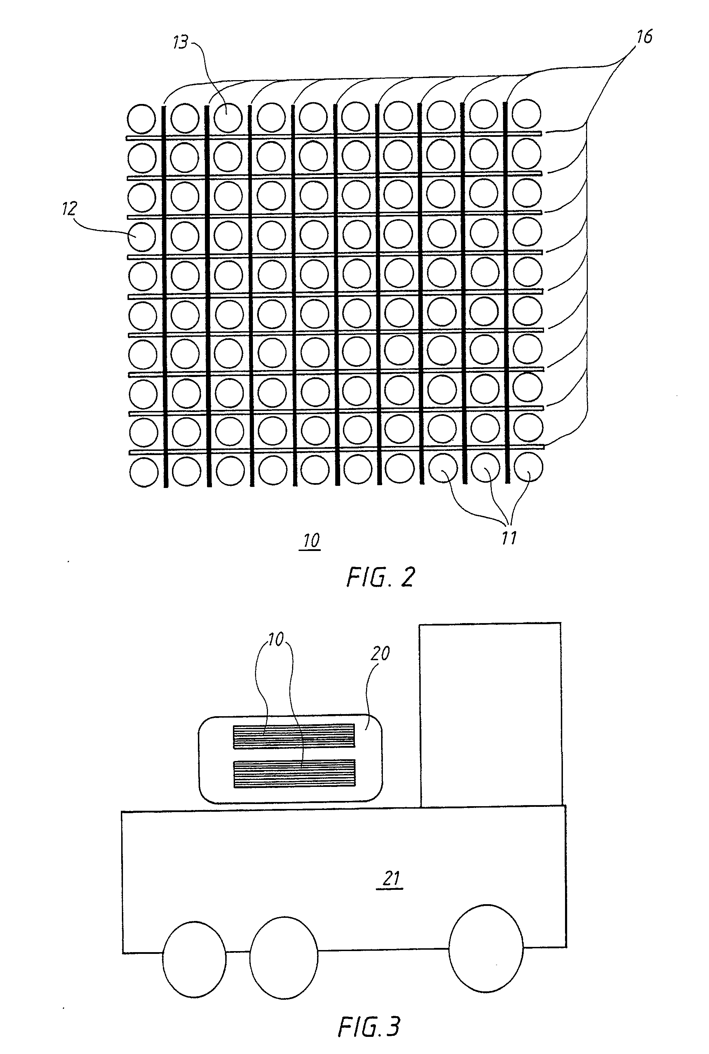

Figure 2 shows a bundle 10 of fuel rods 11 where the shims 16 are inserted crosswise, that is, one layer of shims 16 is inserted between the rows 12 of fuel rods 11 whereas the next layer of shims 16 is inserted between the columns 13.

Figure 3 shows a transport container 20, in which a number of fuel bundles 10, preferably two, are arranged during transportation. Transport containers 20 are then loaded onto the vehicle, for example a lorry 21 as illustrated in Figure 2, in such a number that no risk of criticality will arise.

## Claims

1. A method of reducing the risk of criticality when transporting nuclear material, preferably in the form of fuel rods, which fuel rods (11) are collected into fuel bundles (10) and are retained by spacers (14) and temporary supporting plates (15) in a symmetrical pattern with rows (12) and columns (13), whereby disc-shaped shims (16) containing neutron absorbing material are inserted between the rows and the columns, respectively, of fuel rods, and which fuel bundles are then inserted into a transport container (20), **characterized** in that disc-shaped shims (16), which are made of a polymer material, that contains boron, preferably in the form of boron carbide, are inserted crosswise, alternately between the rows (12) and the columns (13), respectively, of fuel rods.

2. Means for carrying out the method according to claim 1 to reduce the risk of criticality when transporting nuclear material, preferably in the form of fuel rods, which fuel rods (11) are arranged in a symmetrical pattern with rows (12) and columns (13) in one or more fuel bundles (10) retained by spacers (14) and temporary supporting plates (15), with disc-shaped shims (16), containing neutron absorbing material, being arranged between the rows and columns, respectively, of fuel rods, **characterized** in that disc-shaped shims (16) are made of a polymer material, containing boron, preferably in the form of boron carbide, and that the shims are inserted crosswise, alternately between the rows (12) and the columns (13), respectively, of fuel rods.

3. Means according to claim 2, **characterized** in that the polymer material is polyethylene and that boron carbide, preferably in the form of $B_4C$, is included in contents of 0.5 to 5 per cent by weight.

4. Means according to claim 3, **characterized** in that the content of boron carbide is 1.0 to 2.5 per cent by weight.

5. Means according to any of claims 2 to 4, **characterized** in that the boron carbide has a particle size of less than 3 micrometer.

6. Means according to any of claims 2 to 5, **characterized** in that the shims are injection-moulded discs of polyethylene.

*FIG.1*

FIG. 2

FIG.3

## DOCUMENTS CONSIDERED TO BE RELEVANT

| Category | Citation of document with indication, where appropriate, of relevant passages | Relevant to claim | CLASSIFICATION OF THE APPLICATION (Int. Cl.5) |
|---|---|---|---|
| Y | US-A-3 900 116  (AIME GEHRI)<br>* Column 2, lines 17-63; figures 1-4 *<br>- - - | 1,2 | G 21 C 19/40 |
| Y | EP-A-0 002 227  (CABORUNDUM)<br>* Page 1; page 4, lines 16-21; page 12, lines 4-15; page 22, lines 2-11; page 26, line 23 - page 27, line 7; figures 1,3 * | 1 | |
| A | | 3,6 | |
| | - - - | | |
| A | DE-C-3 403 780  (TRANSNU KLEAR)<br>* Column 2, lines 13-31; column 3, lines 6-15; figures 1-3 *<br>- - - | 1 | |
| A | FR-A-1 251 998  (ASSOCIATED LEAD MANUFACTURERS)<br>* Page 1, left-hand column *<br>- - - - - | 1,3 | |

TECHNICAL FIELDS SEARCHED (Int. Cl.5)

G 21 C

The present search report has been drawn up for all claims

| Place of search | Date of completion of search | Examiner |
|---|---|---|
| The Hague | 08 July 91 | JANDL F. |